# EUROPEAN PATENT SPECIFICATION

(11) **EP 3 010 617 B1**
(45) Date of publication and mention of the grant of the patent: **30.11.2022**
(21) Application number: 14744666.0
(22) Date of filing: 19.06.2014
(51) Int. Cl.: C07F 9/48, B01D 11/04

(54) **EXTRACTION SOLVENT CONTROL FOR REDUCING STABLE EMULSIONS**
STEUERUNG EINES EXTRAKTIONSLÖSUNGSMITTELS ZUR REDUZIERUNG STABILER EMULSIONEN
CONTRÔLE DU SOLVANT D'EXTRACTION DESTINÉ À DIMINUER DES ÉMULSIONS STABLES

(30) Priority: 20.06.2013 US 201361837468 P
(43) Date of publication of application: 27.04.2016
(73) Proprietor: INVISTA Textiles (U.K.) Limited, Manchester M2 3DE (GB)
(72) Inventor: TENN, William, J., Beaumont, TX 77706 (US)
(74) Representative: Carpmaels & Ransford LLP
(86) International application number: PCT/US2014/043134
(87) International publication number: WO 2014/205190

(56) References cited:
- US-A1- 2008 083 607
- "Abtrennung von Nickel(0)-Komplexen und phosphorhaltigen Liganden aus Nitrilgemischen", RESEARCH DISCLOSURE, KENNETH MASON PUBLICATIONS, HAMPSHIRE, UK, GB, vol. 537, no. 9, 1 January 2009 (2009-01-01), page 15, XP007138677, ISSN: 0374-4353

## Description

### FIELD OF THE INVENTION

The invention relates to recovery of catalyst and ligand from a hydrocyanation reaction product mixture comprising organic dinitriles using liquid-liquid extraction.

### BACKGROUND OF THE INVENTION

It is well known in the art that complexes of nickel with phosphorous-containing ligands are useful as catalysts in hydrocyanation reactions. Such nickel complexes using monodentate phosphites are known to catalyze hydrocyanation of butadiene to produce a mixture of pentenenitriles. These catalysts are also useful in the subsequent hydrocyanation of pentenenitriles to produce adiponitrile, an important intermediate in the production of nylon. It is further known that bidentate phosphite, phosphinite and phosphonite ligands can be used to form nickel-based catalysts to perform such hydrocyanation reactions.

U.S. Patent No. 3,773,809 describes a process for the recovery of Ni complexes of organic phosphites from a product fluid containing organic nitriles produced by hydrocyanating an ethylenically unsaturated organic mononitrile such as 3-pentenenitrile through extraction of the product fluid with a paraffin or cycloparaffin hydrocarbon solvent. Similarly, U.S. Patent No. 6,936,171 to Jackson and McKinney discloses a process for recovering diphosphite-containing compounds from streams containing dinitriles.
US 2008083607 A1 discloses a process for extractively removing homogeneously dissolved catalysts from a reaction effluent of a hydrocyanation of unsaturated mononitriles to dinitriles, by extraction by means of a hydrocarbon, which comprises a) adding a nonpolar aprotic liquid to the reaction effluent to obtain a stream, and b) extracting the stream at a temperature with the hydrocarbon to obtain a stream comprising the hydrocarbon enriched with the catalyst and a stream having a low catalyst content.

U.S. Patent No. 4,339,395 describes the formation of an interfacial rag layer during extended periods of continuous extraction of certain phosphite ligands. The '395 patent notes that the interfacial rag hinders, if not halts, the phase separation. Because the process is operated continuously, the rag must be removed continuously from the interface as it accumulates to avoid interrupting operation. To solve this problem for the disclosed components, the '395 patent discloses the addition of minor amounts of substantially water-free ammonia.

U.S. Patent No. 7,935,229 describes a process for extractively removing heterogeneously dissolved catalyst from a reaction effluent of a hydrocycanation of unsaturated mononitriles to dinitriles with a hydrocarbon. The catalyst comprises a ligand which may be a monophosphite, a diphosphite, a monophosphonite or a diphosphonite. Ammonia or an amine may be added to a mixture of liquid phases before phase separation takes place.

U.S. Application Serial No. 61/578,524, filed December 21, 2012, describes a process corresponding to that described in the present application, except that a diphosphite ligand is recovered in the process of U.S. Application Serial No. 61/578,524, whereas a diphosphonite ligand is recovered in the process of the present application.

### SUMMARY OF THE INVENTION

This process recovers diphosphonite-containing compounds from a mixture comprising diphosphonite-containing compounds, organic mononitriles and organic dinitriles.

Disclosed is a process for recovering diphosphonite-containing compounds from a feed mixture comprising diphosphonite-containing compounds, organic mononitriles, organic dinitriles and a Lewis acid in a multistage countercurrent liquid-liquid extractor with extraction solvent comprising aliphatic hydrocarbon, cycloaliphatic hydrocarbon or a mixture of aliphatic and cycloaliphatic hydrocarbon. The process comprises:
a) flowing the feed mixture to a mixing section of a mixer-settler in the first stage of the multistage countercurrent liquid-liquid extractor;
b) contacting the feed mixture with extraction solvent from the second stage of the multistage countercurrent liquid-liquid extractor in the mixing section of the mixer-settler of the first stage to form a mixed phase comprising a light phase and a heavy phase, wherein the light phase comprises extraction solvent and extracted diphosphonite-containing compounds, and wherein the heavy phase comprises organic mononitriles and organic dinitriles;
c) passing the mixture from step (b) to a settling section in the mixer-settler of the first stage, wherein the mixed phase separates into the light phase and the heavy phase; and
d) introducing a Lewis base into the settling section of the first stage,
wherein a complex of Lewis acid and Lewis base is formed in the settling section in the mixer-settler of the first stage, wherein at least a portion of the light phase is withdrawn from the settling section and treated to recover diphosphonite-containing compounds extracted into the light phase, and wherein at least a portion of the heavy phase is passed to the second stage of the multistage countercurrent liquid-liquid extractor.

The mixing sections of the stages of the multistage counter current liquid-liquid extractor form an intimate mixture of unseparated light and heavy phase. This intimate mixture comprises an emulsion phase. The emulsion phase may or may not comprise particulate solid material. This emulsion phase separates into a light phase and a heavy phase in the settling sections of the stages, including the first stage. Accordingly, the settling sections of the stages will contain at least some emulsion phase located between the upper light phase and the lower heavy phase. This emulsion phase tends to reduce in size over time. However, in some instances settling takes longer than desired or the emulsion phase never fully separates into a light phase and a heavy phase. This separation problem may be particularly troublesome in the first stage of a multistage countercurrent liquid-liquid extractor.

Addition of Lewis base to the settling section of the first stage has been found to result in enhanced settling of the emulsion phase. For example, this addition may result in the reduction of the size of the emulsion phase in the settling section, wherein the size of the emulsion phase is based upon the size of the emulsion phase in the absence of addition of Lewis base. Enhanced settling in the settling section may also be measured as an increased rate of settling, based upon the rate of settling in the absence of addition of Lewis base.

Another problem, which may be solved by addition of Lewis base is formation of rag and build-up of a rag layer the settling section. Rag formation is discussed in U.S. Patent No. 4,339,395 and U.S. Patent No. 7,935,229. Rag comprises particulate solid material, and may be considered to be a form of an emulsion phase, which is particularly stable in the sense that it does not dissipate in a practical amount of time for conducting an extraction process. Rag may form in the mixing section or the settling section of an extraction stage, particularly the first stage of a multistage countercurrent liquid-liquid extractor. In the settling section, the rag forms a layer between the heavy phase and the light phase. The formation of a rag layer in the settling section inhibits proper settling of the heavy phase and the light phase. The formation of a rag layer may also inhibit the extraction of diphosphonite-containing compounds from the heavy phase into the light phase. In a worst case scenario, rag can build up to the extent of completely filling a separation section, necessitating shut down of the extraction process to clean out the settling section. It has been found that addition of Lewis base to the settling section may reduce or eliminate the size of a rag layer or reduce its rate of formation, based upon the size and rate of formation of the rag layer in the absence of addition of Lewis base.

Accordingly, addition of Lewis base to the settling section of the first stage of a multistage countercurrent extractor may achieve at least one of the following results: (a) a reduction in the size of an emulsion phase in the settling section, based upon the size of the emulsion phase in the absence of addition of Lewis base; (b) an increase in the rate of settling in the settling section, based upon the rate of settling in the absence of addition of Lewis base; (c) an increase in the amount of diphosphonite-containing compounds in the light phase, based upon the upon the amount of diphosphonite-containing compounds in the light phase in the absence of addition of Lewis base; (d) a partial or total reduction in the size of a rag layer in the settling section, based upon the size of a rag layer in the settling section in the absence of addition of Lewis base; and (e) reduction in the rate of formation of a rag layer in the settling section, based upon the rate of formation of a rag layer in the settling section in the absence of addition of Lewis base.

A particular example of a Lewis acid, which may be present in the feed to the extractor, is ZnCl₂.

The extraction solvent feed from the second stage of the multistage countercurrent liquid-liquid extractor to the first stage of the multistage countercurrent liquid-liquid extractor may comprise at least 1000 ppm, for example, from 2000 to 5000 ppm, of diphosphonite-containing compounds. The extraction solvent feed from the second stage may comprise at least 10 ppm, for example, from 20 to 200 ppm, of nickel.

The diphosphonite-containing compound may be a diphosphonite ligand of formula I:

(R¹)(R²-O)P-O-Y-O-P(O-R³)(R⁴) I

where R¹ and R² are each independently identical or different, separate or bridged organic radicals; R³ and R⁴ are each independently identical or different, separate or bridged organic radicals; and Y is a bridging group.

Examples of phosphonite-containing compounds of formula (I) may be diphosphonite ligands of formula (II) or (formula III): 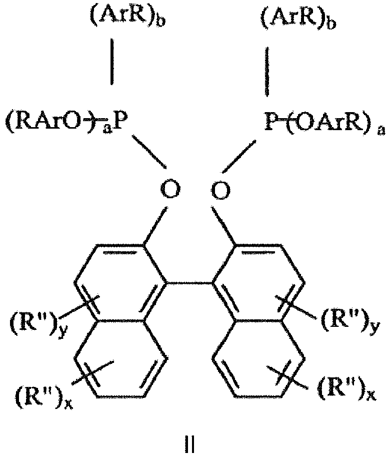 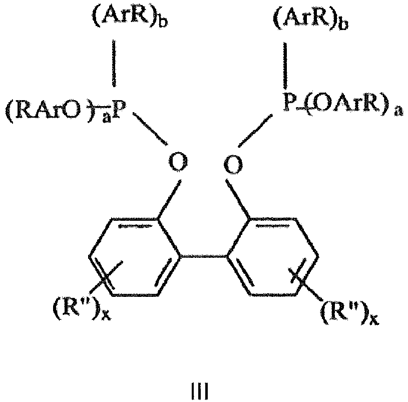 wherein:
x=0 to 4;
y=0 to 2;
a and b individually are either 0, 1, or 2, provided a+b=2;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

Examples of diphosphonite ligands of formula (III) include compounds where at least one R represents ethenyl, propenyl, acryloyl, methacryloyl or the organic radical with a terminal ethenyl, propenyl, acryloyl, or methacryloyl group or at least one R" represents ethenyl, propenyl, or the organic radical with a terminal ethenyl or propenyl group.

An example of a diphosphonite ligand of formula (III) is a compound of formula (IV):

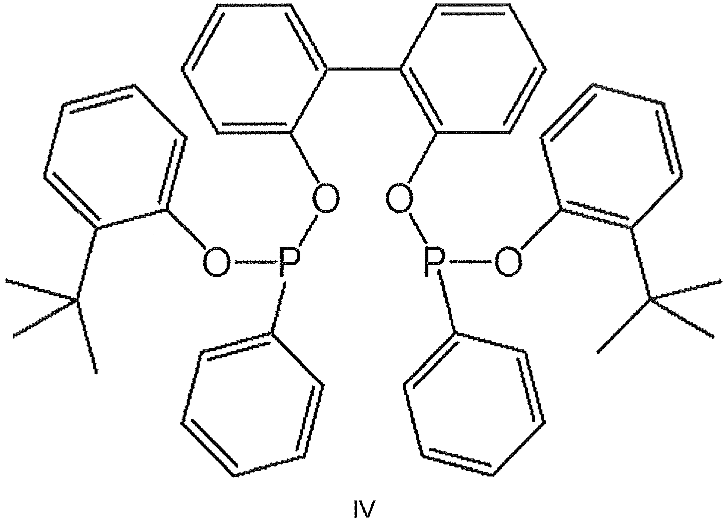

Diphosphonite ligands and the synthesis of these diphosphonite ligands are described in U.S. Patent No. 6,924,345 and in U.S. Patent No. 7,935,229.

At least a portion of the diphosphonite ligand may be complexed with zero valent Ni.

At least one stage of the extraction may be carried out above 40°C.

The Lewis base may be a monodentate triarylphosphite or a monodentate triarylphosphine, wherein the aryl groups are unsubstituted or substituted with alkyl groups having 1 to 12 carbon atoms, and wherein the aryl groups may be interconnected.

The Lewis base may optionally be selected from the group consisting of:
a) anhydrous ammonia, pyridine, alkylamine, dialkylamine, trialkylamine wherein the alkyl groups have 1 to 12 carbon atoms; and
b) polyamine.

If the Lewis base is a polyamine, the polyamine may comprise at least one selected from hexamethylene diamine, and dimers and trimers of hexamethylene diamine, for example, bis-hexamethylene triamine.

The Lewis base may optionally comprise a basic ion exchange resin, for example, Amberlyst 21^{®} resin.

One example of a suitable cyclic alkane extraction solvent is cyclohexane.

The feed mixture may be an effluent stream from a hydrocyanation process, for example, a process for hydrocyanating 3-pentenenitrile, a process for the single hydrocyanation of 1,3-butadiene to pentenenitriles or a process for the double hydrocyanation of 1,3-butadiene to adiponitrile.

### BRIEF DESCRIPTION OF THE DRAWINGS

Figure 1 is a diagram showing the flow of fluids through a multistage countercurrent liquid-liquid extractor.
Figure 2 is a diagram showing a mixing section and a settling section of a stage of a multistage countercurrent liquid-liquid extractor.
Figure 3 is a diagram showing a mixing/settling apparatus having three chambers in the settling section.

### DETAILED DESCRIPTION OF THE INVENTION

The processes of the present invention involve methods for recovering diphosphonite-containing compounds from a mixture comprising diphosphonite-containing compounds and organic dinitriles, using liquid-liquid extraction.

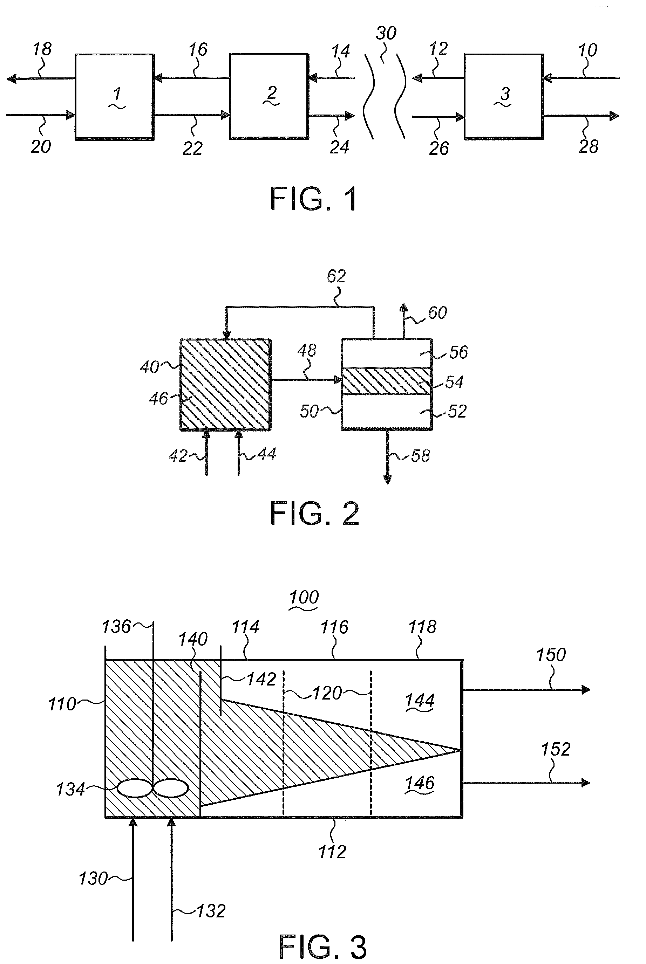

Figure 1 is a diagram of a multistage countercurrent liquid-liquid extractor. Lines in Figure 1 represent flow of materials, rather than any particular type of equipment, such as pipes. Similarly, squares in this diagram represent stages or sections for mixing and settling, rather than any particular type of equipment.

Three stages are depicted in Figure 1. The first stage is depicted by mixing and settling section **1**. The second stage is depicted by mixing and settling section **2**. The final stage is depicted by mixing and settling section **3**. Gap **30** represents a space where additional stages may be inserted. For example, one or more, for example, from one to four, mixing and settling sections may be inserted in gap **30** between mixing and settling section **2** and mixing and settling section **3**.

In Figure 1, a fresh extraction solvent feed, for example, cyclohexane, is introduced into the multistage countercurrent extractor via line **10**. The extraction solvent or light phase exiting from mixing settling section **3** passes through line **12** to the next stage of the multistage extractor. In a multistage countercurrent liquid-liquid extractor having three stages, extraction solvent in line **12** would pass directly into stage **2** via line **14**. Extraction solvent from stage **2** passes through line **16** to stage **1**. The extraction solvent comprising extracted diphosphonite-containing compounds passes out of the stage **1** mixing and settling section through line **18**.

A feed comprising diphosphonite-containing compounds is fed into the stage **1** mixer and settler via line **20**. The feed further comprises a mixture comprising organic mononitriles and dinitriles, which is immiscible with the extraction solvent. The feed further comprises a Lewis acid. In stage **1**, a portion of the diphosphonite-containing compounds is extracted into the extraction solvent which exits stage **1** via line **18**. The immiscible dinitrile and mononitrile mixture or the heavy phase is removed from the stage **1** mixing and settling section by line **22** and is passed into the stage **2** mixing and settling section. A portion of the diphosphonite-containing compounds is extracted into the light phase in the stage **2** mixing and settling section. The heavy phase exits the stage **2** mixing and settling section by line **24**. Similarly, if there are additional stages in gap **30** shown in Figure 1, extraction of diphosphonite-containing compounds will take place in such intermediate stages in a similar manner to that taking place in stage **2**.

After the heavy phase passes through the first stage and any intermediate stages, it passes through the final stage mixing and settling section **3**. In particular, the heavy phase is introduced into mixing and setting section **3** through line **26**. After passing through the final stage mixing and settling section **3**, the heavy phase exits via line **28**.

A two-stage multistage countercurrent liquid-liquid extractor is represented in Figure 1 by mixing and settling sections **1** and **2**; lines **14**, **16** and **18** showing the direction of extraction solvent flow; and lines **20**, **22** and **24** showing the direction of heavy phase flow. In a two-stage multistage counter current liquid-liquid extractor, mixing and settling section **3**; lines **10**, **12**, **26** and **28**; and gap **30** are omitted. In the two stage countercurrent liquid-liquid extractor, extraction solvent comprising extracted diphospite-containing compounds passes from the extractor through line **18**, and extracted heavy phase, i.e. raffinate, passes from the extractor through line **24**.

Thus, it can be seen that the multistage countercurrent liquid-liquid extractor comprises two or more stages with countercurrent flow of extraction solvent and heavy phase. In view of the direction of flow of light and heavy phase through the stages of extraction, it will be appreciated that the concentration of solute, e.g., diphosphonite-containing compound, is highest in both the light and heavy phases of the first stage and lowest in the light and heavy phases of the final stage.

Figure 2 is a diagrammatic representation of one type of a mixing and settling section, also referred to herein as a mixer-settler. This type of mixer-settler may be used in any of the stages shown in Figure 1. This mixer-settler comprises a mixing section **40** and a settling section **50**. The mixing section **40** and the settling section **50** are separate. All of the effluent from the mixing section **40** flows into the settling section **50**. Fluid from the mixing section **40** flows through the settling section **50** in a horizontal manner, although there is also no restriction of movement of fluids vertically throughout the settling section **50**.

An extraction solvent is introduced into the mixing section **40** by line **42**. A feed comprising diphosphonite-containing compounds is introduced into the mixing section **40** by line **44**. Alternatively, the contents of lines **42** and **44** may be combined upstream of the mixing section **40** and introduced into mixing section **40** through a single inlet. These two feeds are mixed in the mixing section **40** to provide a mixed phase comprising an emulsion phase represented in Figure 2 by shaded area **46**.

Line **48** represents the flow of mixed phase **46** from the mixing section **40** into the settling section **50**. As depicted in Figure 2, there are three phases in the settling section **50**, including a heavy phase **52**, a mixed phase **54**, and a light phase **56**. The heavy phase **52** is depleted in diphosphonite-containing compounds, insofar as it has a lower concentration of diphosphonite-containing compounds as compared with the concentration of diphosphonite-containing compounds in feed **44**, due to the extraction of diphosphonite-containing compounds into the light phase **56**. Correspondingly, the light phase **56** is enriched in diphosphonite-containing compounds, insofar as it has a higher concentration of diphosphonite-containing compounds as compared with the concentration of diphosphonite-containing compounds in extraction solvent feed **42**, due to the extraction of diphosphonite-containing compounds into the light phase **56**. At least a portion of the heavy phase **52** exits the settling section **50** via line **60.** At least a portion of the light phase **56** is removed from the settling section **50** via line **58**.

Although not shown in Figure 2, which is diagrammatically shows the flow of fluids, it will be understood that each of the mixing section **40** and the settling section **50** may comprise one or more stages, subsections, compartments or chambers. For example, settling section **50** may include more than one chamber between the point of introduction of the mixed phase **46** through line **48** and the point of withdrawal of light phase and heavy phase through lines **58** and **60**. Horizontal extension between the point of introduction of the mixed phase **46** through line **48** and the point of withdrawal of light and heavy phases through lines **58** and **60** promotes settling of the light and heavy phases **56** and **52**. The size of the mixed phase **54** may become progressively smaller as fluids settle and flow through the chamber. For example, the final chamber from where fluids are removed may include little or no mixed phase **54**. It will further be understood that mixing section **40** may include one or more types of mixing apparatus, such as an impeller, not shown in Figure 2.

Figure 3 provides a representation of a mixer-settler **100** having a multistage settling section. Mixer-settler **100** has a mixing section **110** and a settling section **112**. In mixer-settler **100**, the mixing section **110** is separate from the settling section **112**. The settling section has three compartments, represented in Figure 3 as sections **114**, **116**, and **118**. These sections are separated by coalescence plates **120**. The coalescence plates **120** may be designed to provide flow of separated light and heavy phases between chambers, while restricting the flow of emulsion phase between chambers. A feed comprising a diphosphonite-containing compound is passed into the mixing section **110** via line **130**. The extraction solvent is introduced into mixing section **110** via line **132**. The mixing section **110** includes an impeller **134** mounted on shaft **136** to provide for mechanical mixing of fluids. Mixing of the feeds provides a mixed phase comprising an emulsion phase represented in Figure 3 by shading **140**.

The mixed phase **140** flows into the settling section **112** as an overflow from the mixing section **110**. This mixed phase **140** is prevented from flowing directly into the light phase **144** by baffle plate **142**. As settling occurs in settling section **112**, the volume of the mixed phase **140** decreases, the volume of the light phase **144** increases, and the volume of the heavy phase **146** increases. Heavy phase **146** is removed from settling section **112**, in particular from chamber **118**, via line **152** and light phase **144** is removed from settling section **112**, in particular, from chamber **118**, via line **150**.

It is desirable for both a mononitrile and a dinitrile to be present in the countercurrent contactor. For a discussion of the role of monodentate and bidentate ligand in extraction of hydrocyanation reactor effluent streams, see U.S. Patent No. 3,773,809 to Walter and U.S. Patent 6,936,171 to Jackson and McKinney.

For the process disclosed herein, suitable molar ratios of mononitrile to dinitrile components include 0.01 to 2.5, for example, 0.01 to 1.5, for example 0.65 to 1.5.

Maximum temperature is limited by the volatility of the hydrocarbon solvent utilized, but recovery generally improves as the temperature is increased. Examples of suitable operating ranges are 40°C to 100°C and 50°C to 80°C.

The controlled addition of monophosphite ligands may enhance settling. Examples of monophosphite ligands that may be useful as additives include those disclosed in Drinkard et al U.S. Patent 3,496,215, U.S. Patent 3,496,217, U.S. Patent 3,496,218, U.S. Patent 5,543,536, and published PCT Application WO 01/36429 (BASF).

As disclosed herein, the addition of Lewis base compounds to a mixture comprising diphosphonite-containing compounds, organic mononitriles and organic dinitriles enhances settling, especially when the mixture comprises a Lewis acid, such as ZnCl₂. Examples of suitable weak Lewis base compounds include water and alcohols. Suitable stronger Lewis base compounds include hexamethylene diamine, dimers and trimers of hexamethylene diamine, ammonia, aryl- or alkyl amines, such as pyridine or triethylamine, or basic resins such as Amberlyst 21^{®}, a commercially available basic resin made by Rohm and Haas. The addition of Lewis base may reduce or eliminate any inhibiting effect of Lewis acid on catalyst recovery.

The reaction product of Lewis acid with Lewis base may become entrained in the raffinate phase as it moves through the multistage countercurrent liquid-liquid extractor. In particular, this product may form a precipitate in the raffinate phase in the form of a complex of Lewis acid with Lewis base. However, this precipitate may exist as a dispersion of fine particles distributed throughout the raffinate phase. This precipitate may be removed by conventional techniques, such as filtration, centrifugation or distillation accompanied by removal of bottoms containing the precipitate, after the raffinate is removed from the last stage of the multistage countercurrent liquid-liquid extractor.

The diphosphonite-containing compounds extracted by the processes described herein comprise bidentate phosphorus-containing ligands. These extracted ligands comprise free ligands (e.g., those which are not complexed to a metal, such as nickel) and those which are complexed to a metal, such as nickel. Accordingly, it will be understood that extraction processes described herein are useful for recovering diphosphonite-containing compounds which are metal/ligand complexes, such as a complex of zero valent nickel with at least one ligand comprising a bidentate-phosphorus containing ligand.

Suitable ligands for extraction are bidentate phosphorous-containing ligands selected from the group consisting of bidentate phosphonites, and bidentate phosphinites. Preferred ligands are bidentate phosphonite ligands.

### Diphosphonite Ligands

The diphosphonite-containing compound may be a diphosphonite ligand of formula (I):

(R¹)(R2-O)P-O-Y-O-P(O-R³)(R⁴) I

where R¹ and R² are each independently identical or different, separate or bridged organic radicals; R³ and R⁴ are each independently identical or different, separate or bridged organic radicals; and Y is a bridging group.

The R¹ and R² radicals may each independently be identical or different organic radicals. Examples of R¹ and R² radicals are aryl radicals, preferably those having from 6 to 10 carbon atoms, which may be unsubstituted or mono- or polysubstituted, in particular by C₁-C₄-alkyl, halogen, such as fluorine, chlorine, bromine, halogenated alkyl, such as trifluoromethyl, aryl, such as phenyl, or unsubstituted aryl groups.

The R³ and R⁴ radicals may each independently be identical or different organic radicals. Examples of R³ and R⁴ radicals are aryl radicals, preferably those having from 6 to 10 carbon atoms, which may be unsubstituted or mono- or polysubstituted, in particular by C₁-C₄-alkyl, halogen, such as fluorine, chlorine, bromine, halogenated alkyl, such as trifluoromethyl, aryl, such as phenyl, or unsubstituted aryl groups.

The R¹ and R² radicals may each be separate or bridged. The R³ and R⁴ radicals may also each be separate or bridged. The R¹, R², R³ and R⁴ radicals may each be separate, two may be bridged and two separate, or all four may be bridged.

Examples of phosphonite-containing compounds of formula (I) may be diphosphonite ligands of formula (II) or (formula III): 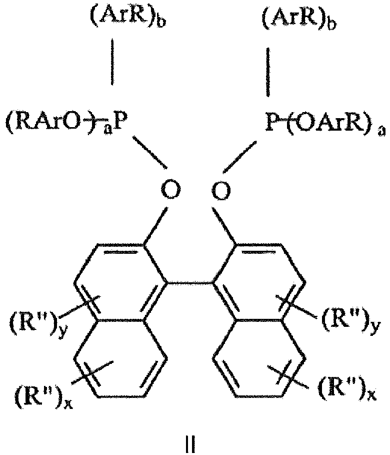 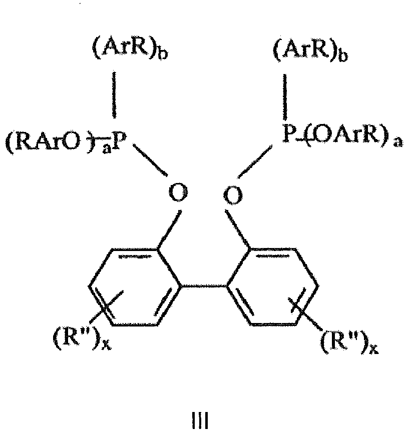 wherein:
x=0 to 4;
y=0 to 2;
a and b individually are either 0, 1, or 2, provided a+b=2;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

At least one R in formula (II) or formula (III) may represent ethenyl, propenyl, acryloyl, methacryloyl or the organic radical with a terminal ethenyl, propenyl, acryloyl, or methacryloyl group and/or at least one R" may represent ethenyl, propenyl, or the organic radical with a terminal ethenyl or propenyl group.

An example of a diphosphonite ligand of formula (III) is a compound of formula (IV):

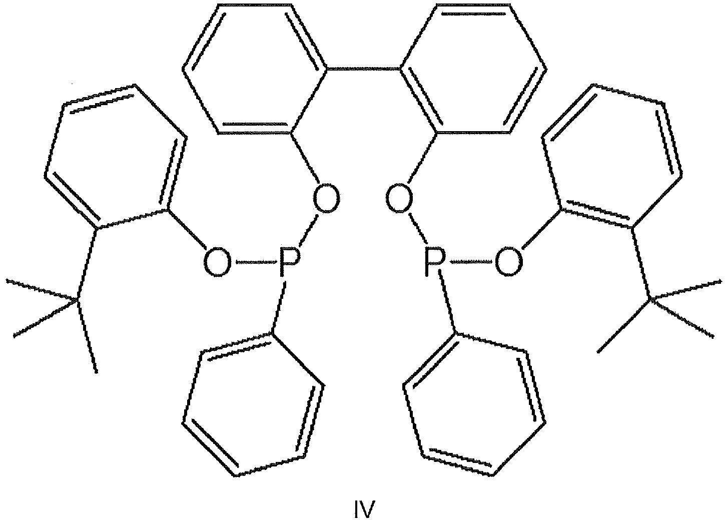

Diphosphonite ligands and the synthesis of these diphosphonite ligands are described in U.S. Patent No. 6,924,345 and in U.S. Patent No. 7,935,229.

### Extraction Solvent

Suitable hydrocarbon extraction solvents include paraffins and cycloparaffins (aliphatic and alicyclic hydrocarbons) having a boiling point in the range of about 30 °C to about 135 °C, including n-pentane, n-hexane, n-heptane and n-octane, as well as the corresponding branched chain paraffinic hydrocarbons having a boiling point within the range specified. Useful alicyclic hydrocarbons include cyclopentane, cyclohexane and cycloheptane, as well as alkyl substituted alicyclic hydrocarbons having a boiling point within the specified range. Mixtures of hydrocarbons may also be used, such as, for example, mixtures of the hydrocarbons noted above or commercial heptane which contains a number of hydrocarbons in addition to n-heptane. Cyclohexane is the preferred extraction solvent.

The lighter (hydrocarbon) phase recovered from the multistage countercurrent liquid-liquid extractor is directed to suitable equipment to recover catalyst, reactants, etc. for recycle to the hydrocyanation, while the heavier (lower) phase containing dinitriles recovered from the multistage countercurrent liquid-liquid extractor is directed to product recovery after removal of any solids, which may accumulate in the heavier phase. These solids may contain valuable components which may also be recovered, e.g., by the process set forth in U.S. Patent No. 4,082,811.

### EXAMPLES

In the following examples, values for extraction coefficient are the ratio of weight fraction of catalyst in the extract phase (hydrocarbon phase) versus the weight fraction of catalyst in the raffinate phase (organonitrile phase). An increase in extraction coefficient results in greater efficiency in recovering catalyst. As used herein, the terms, light phase, extract phase and hydrocarbon phase, are synonymous. Also, as used herein, the terms, heavy phase, organonitrile phase and raffinate phase, are synonymous.

Analysis of the extract and the raffinate streams of the catalyst extraction was conducted on an Agilent 1100 series HPLC and via ICP. The HPLC was used to determine the exctration efficiency of the process.

In the Examples which follow, a diphosphite ligand is present. However, it is believed that the results of these Examples would be essentially the same if a diphosphonite ligand were substituted for the diphosphite ligand.

### Example 1

To a 50 mL, jacketed, glass laboratory extractor, equipped with a magnetic stirbar, digital stir-plate, and maintained at 65°C, was charged 10 grams of the product of a pentenenitrile-hydrocyanation reaction, and 10 grams of the extract from the second stage of a mixer-settler cascade, operated in counter-current flow. The extract from the second stage contained approximately 50 ppm nickel and 3100 ppm diphosphite ligand. No additives were present.

The reactor product was approximately:
85% by weight C₆ dinitriles
14% by weight C₅ mononitriles
1% by weight catalyst components
420 ppm by weight active nickel
566 ppm by weight zinc.

The laboratory reactor was then mixed at 1160 rotations-per-minute, for 20 minutes, and then allowed to settle for 15 minutes. After settling for 15 minutes, a stable emulsion was present throughout the extract phase. Samples were obtained of the extract and raffinate phases of the extractor and analyzed to determine the extent of catalyst extraction. The ratio of active nickel present in the extract phase vs. the raffinate phase was found to be 14. The concentration of zinc in the raffinate was 566 ppm.

### Example 2

Example 1 was repeated except that 500 ppm of polyethylenimine (PEI) was added to the system. The polyethylenimine (PEI) was end-capped with ethylenediamine and had an average Mn ∼ 600.

### Example 3

Example 1 was repeated except that 1000 ppm of polyethylenimine (PEI) was added to the system. The polyethylenimine (PEI) was end-capped with ethylenediamine and had an average Mn ∼ 600.

### Example 4

Example 1 was repeated except that 500 ppm of polyethylenimine, aqueous solution (PEI/H₂O) was added to the system. The polyethylenimine, aqueous solution was a polyethylenimine solution in water having a PEI/H₂O ratio of 1:1. The polyethyleneimine had an average Mn ∼ 1200.

### Example 5

Example 1 was repeated except that 1000 ppm of polyethylenimine, aqueous solution (PEI/H₂O) was added to the system. The polyethylenimine, aqueous solution was a polyethylenimine solution in water having a PEI/H₂O ratio of 1:1. The polyethyleneimine had an average Mn ∼ 1200.

### Example 6

Example 1 was repeated except that 1000 ppm of polyacrylate, sodium was added to the system. The polyacrylate, sodium was poly(acrylic acid) sodium salt with an average Mw ∼ 2100.

### Example 7

Example 1 was repeated except that 3000 ppm of polyacrylate, sodium was added to the system. The polyacrylate, sodium was poly(acrylic acid) sodium salt with an average Mw ∼ 2100.

### Example 8

Example 1 was repeated except that 500 ppm of a surfactant was added to the system. The surfactant was an aqueous solution of mixture of an alkyldimethylamide, an alkylethersulfate, and an alkylphosphateester.

### Example 9

Example 1 was repeated except that 1000 ppm of a surfactant was added to the system. The surfactant was an aqueous solution of mixture of an alkyldimethylamide, an alkylethersulfate, and an alkylphosphateester.

### Example 10

Example 1 was repeated except that 250 ppm of hexamethylene diamine (HMD) was added to the system.

### Example 11

Example 1 was repeated except that 500 ppm of 250 ppm of hexamethylene diamine (HMD) was added to the system.

### Example 12

Example 1 was repeated except that 1000 ppm of 250 ppm of hexamethylene diamine (HMD) was added to the system.

Results of Examples 1-12 are summarized in Table 1. The data summarized in Table 1 represent evaluations of a number of additives for prevention of formation of stable emulsions and rags during catalyst extraction. Example 1 is a control experiment, which shows that in the absence of any additive a stable emulsion is formed. Examples 2-3 show that PEI is ineffective for preventing formation of a stable emulsion under these conditions. Example 4 shows that 1:1 polyethylenimine is water is ineffective for preventing stable emulsion formation at 500 ppm. By way of contrast, Example 5 shows that PEI/H₂O is effective at 1000 ppm for preventing stable emulsion formation. Examples 6-7 show that polyacrylate, sodium salt, is not effective at 1000 ppm, but is at 3000 ppm loading. Examples 8-9 show that the surfactant solution is not effective under any of the conditions evaluated for prevention of a stable emulsion. Examples 10-12 show that hexamethylene diamine is effective under these conditions for prevention of formation of a stable emulsion during catalyst extraction over the range of concentrations from 250-1000 ppm.

**Table 1:**

| **Effectiveness of additives for prevention of stable emulsion formation during catalyst extraction** | | | |
|---|---|---|---|
| Example | Additive | Concentration (ppm) | Stable emulsion |
| 1 | None | 0 | Yes |
| 2 | PEI | 500 | Yes |
| 3 | PEI | 1000 | Yes |
| 4 | PEI/H₂O (1:1) | 500 | Yes |
| 5 | PEI/H₂O (1:1) | 1000 | No |
| 6 | Polyacrylate, sodium | 1000 | Yes |
| 7 | Polyacrylate, sodium | 3000 | No |
| 8 | Surfactant | 500 | Yes |
| 9 | Surfactant | 1000 | Yes |
| 10 | HMD | 250 | No |
| 11 | HMD | 500 | No |
| 12 | HMD | 1000 | No |
| A "No" in the column labeled Stable emulsion indicates that the additive was effective under the conditions tested for preventing the formation of a stable emulsion. | | | |

### Examples 13-17

These Examples 13-17 illustrate that effective catalyst recovery occurs for a mononitrile to dinitrile ratio greater than 0.65.

Five different mixtures comprised of a Ni diphosphite complex, with the diphosphite ligand shown in Structure XX (where R¹⁷ is isopropyl, R¹⁸ is H, and R¹⁹ is methyl), ZnCl₂ (equimolar with Ni) and differing in the ratio of mononitrile to dinitrile, were separately liquid-liquid batch extracted with an equal weight of cyane

(i.e. cyclohexane). The molar ratio of organic mononitrile to organic dinitrile and the resulting extraction coefficients are shown in the Table 2 below. A compound may be effectively recovered if it has an extraction coefficient of 1 or greater at solvent to feed ratios greater than 1 using a countercurrent multistage extractor.

**Table 2.**

| **Catalyst and ligand extraction coefficients for varying ratios of mononitriles-to-dinitriles** | | | |
|---|---|---|---|
| Example | mononitrile/dinitrile | Catalyst extraction coefficient | Ligand extraction coefficient |
| 13 | 2.33 | 1.28 | 4.09 |
| 14 | 1.85 | 1.33 | 8.08 |
| 15 | 1.19 | 2.02 | 16.97 |
| 16 | 0.91 | 2.63 | 35.99 |
| 17 | 0.57 | 4.82 | 49.59 |

### Example 18

This Example demonstrates the effect of hold-up time on the extractability of the diphosphite ligand catalyst.

A mixture comprised predominantly of organic dinitriles and a Ni diphosphite complex, the structure of the diphosphite ligand being shown in Structure XX (where R¹⁷ is isopropyl, R¹⁸ is H, and R¹⁹ is methyl) and ZnCl₂ (equimolar with Ni) was divided into two portions. Both portions are liquid-liquid extracted in a three-stage contactor at 40°C, with an equal weight of cyclohexane. Both portions were sampled with time and the progress of the catalyst recovery into the extract phase is shown in Table 3 as the percent of the final steady state value achieved at a given time.

**Table 3**

| **Concentration of Diphosphite ligand with time in the extracting solvent phase.** | |
|---|---|
| Time, minutes | % of steady state concentration at 40°C |
| 2 | 12 |
| 4 | 19 |
| 8 | 34 |
| 14 | 52 |
| 30 | 78 |
| 60 | 100 |
| 91 | 100 |

### Example 19

This Example illustrates the effect of temperature on the extractability of catalyst with first-stage extraction solvent recycle.

A mixture comprised predominantly of organic dinitriles and a Ni diphosphite complex, the structure of the diphosphite ligand being shown in Structure XXIV (where R¹⁷ is methyl, R¹⁸ is methyl and R¹⁹ is H) and ZnCl₂ (equimolar with Ni) was divided into three portions. The portions were batch liquid-liquid extracted at 50°C, 65°C and 80°C, respectively, with an equal weight of n-octane and monitored with time. The results are shown in Table 4.

**Table 4**

| Time | % of steady state at 50°C | % of steady state at 65°C | % of steady state at 80°C |
|---|---|---|---|
| 2 | 0.0 | 0.0 | 1.8 |
| 4 | 0.0 | 0.0 | 1.6 |
| 8 | 0.0 | 0.0 | 3.6 |
| 14 | 0.0 | 0.0 | 4.3 |
| 20 | 0.0 | 0.0 | 3.6 |
| 30 | 0.0 | 0.0 | 7.6 |
| 60 | 0.0 | 1.6 | 16.3 |
| 90 | 0.7 | 4.0 | 48.6 |

### Example 20

This Example demonstrates the effect of adding water in three-stage extraction with cyclohexane recycle in the first stage.

Fifteen grams of a mixture comprised predominantly of organic dinitriles and a Ni diphosphite complex, the structure of the diphosphite ligand being shown in Structure XXIV (where R¹⁷ is methyl, R¹⁸ is methyl and R¹⁹ is H) and ZnCl₂ (equimolar with Ni), was extracted in a three-stage continuous extractor at a temperature of 50°C with an equal weight of cyclohexane for one hour resulting in an catalyst extraction coefficient of 4.3, as measured by the amount of catalyst in the extract of the first stage divided by the amount of catalyst in the feed of the reaction mixture fed to the last stage of the three-stage countercurrent extractor.

To this mixture, 100 microliters of water was added. After continuing to heat and agitate for another hour, the diphosphite Ni extraction coefficient was measured as 13.4 - a threefold increase.

### Examples 21 and 22

These Examples demonstrate the effect of adding hexamethylene diamine (HMD) to the extraction zone.

Example 1 was repeated except that hexamethylene diamine was added to the product of a pentene-hydrocyanation reaction. In Example 21, 250 ppm of HMD was added, and in Example 22, 500 ppm of HMD was added. To a 50 mL, jacketed, glass laboratory extractor, equipped with a magnetic stirbar, digital stir-plate, and maintained at 65°C, was charged 10 grams of the product of pentene-hydrocyanation reactor product, and 10 grams of the extract from the second stage of a mixer-settler cascade, operated in counter-current flow.

The reactor product was approximately:
85% by weight C₆ dinitriles
14% by weight C₅ mononitriles
1% by weight catalyst components
360 ppm by weight active nickel.

The laboratory reactor was then mixed at 1160 rotations-per-minute, for 20 minutes, and then allowed to settle for 15 minutes. A stable emulsion was present throughout the extract phase in the absence of the addition of HMD. After 15 minutes of settling, essentially no emulsion phase was present when HMD was added. Samples were obtained of the extract and raffinate phases of the extractor and analyzed to determine the extent of catalyst extraction.

**Table 5**

| **Effect of hexamethylene diamine on catalyst extraction** | | | |
|---|---|---|---|
| Example | Concentration of HMD added (ppm) | Catalyst recovery (KLL) | Stable emulsion |
| 1 | 0 | 14 | Yes |
| 21 | 250 | 43 | No |
| 22 | 500 | 80 | No |

## Claims

1. A process for recovering diphosphonite-containing compounds from a feed mixture comprising diphosphonite-containing compounds, organic mononitriles, organic dinitriles and a Lewis acid in a multistage countercurrent liquid-liquid extractor with extraction solvent comprising aliphatic hydrocarbon, cycloaliphatic hydrocarbon or a mixture of aliphatic and cycloaliphatic hydrocarbon, said process comprising:
a) flowing the feed mixture to a mixing section of a mixer-settler in the first stage of the multistage countercurrent liquid-liquid extractor;
b) contacting the feed mixture with extraction solvent from the second stage of the multistage countercurrent liquid-liquid extractor in the mixing section of the mixer-settler of the first stage to form a mixed phase comprising a light phase and a heavy phase, wherein the light phase comprises extraction solvent and extracted diphosphonite-containing compounds, and wherein the heavy phase comprises organic mononitrile and organic dinitriles;
c) passing the mixture from step (b) to a settling section in the mixer-settler of the first stage, wherein the mixed phase separates into the light phase and the heavy phase; and
d) **characterized by** introducing a Lewis base into the settling section of the first stage,
wherein a complex of Lewis acid and Lewis base is formed in the settling section in the mixer-settler of the first stage, wherein at least a portion of the light phase is withdrawn from the settling section and treated to recover diphosphonite-containing compounds extracted into the light phase, and wherein at least a portion of the heavy phase is passed to the second stage of the multistage countercurrent liquid-liquid extractor;
wherein the Lewis base is selected from the group consisting of:
a) polyamine; and
b) poly(acrylic acid), sodium salt.

2. The process of claim 1, wherein the Lewis acid is ZnCl₂.

3. The process of claim 1, wherein the extraction solvent feed from the second stage comprises at least 1000 ppm of diphosphonite-containing compounds.

4. The process of claim 1, wherein the diphosphonite-containing compound is:
(R¹)(R²-O)P-O-Y-O-P(O-R³)(R⁴) I
where R¹ and R² are each independently identical or different, separate or bridged organic radicals; R³ and R⁴ are each independently identical or different, separate or bridged organic radicals; and Y is a bridging group.

5. The process of claim 1, wherein the diphosphonite-containing compound is selected from the group consisting of: 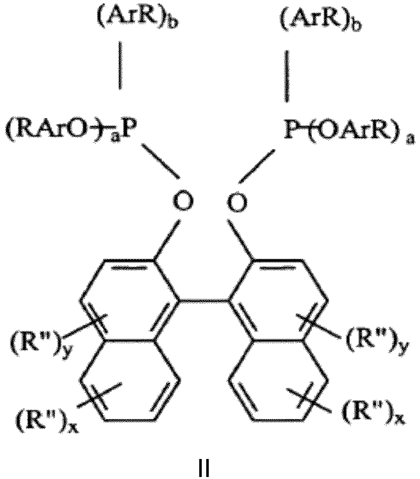 and 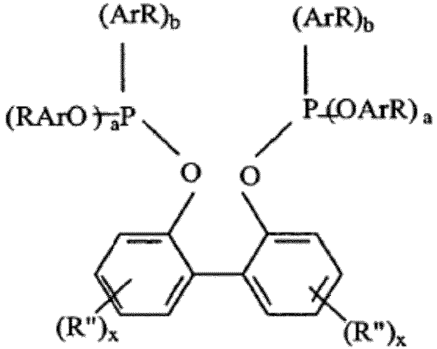 wherein:
x=0 to 4;
y=0 to 2;
a is 1 and b is 1;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

6. The process of claim 5, wherein at least one R represents ethenyl, propenyl, acryloyl, methacryloyl or the organic radical with a terminal ethenyl, propenyl, acryloyl, or methacryloyl group or at least one R" represents ethenyl, propenyl, or the organic radical with a terminal ethenyl or propenyl group.

7. The process of claim 1, wherein the diphosphonite-containing compound is:

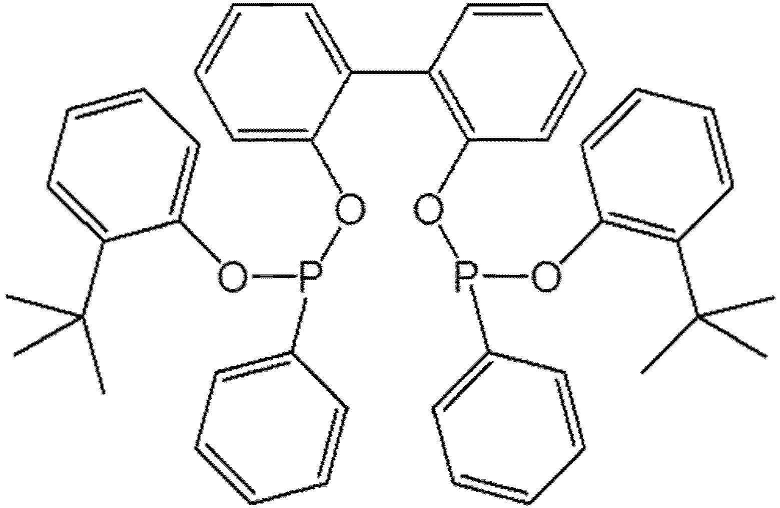

8. The process of claim 2, wherein at least a portion of the diphosphonite-containing compound is complexed with zero valent Ni.

9. The process of claim 1, wherein at least one stage of the extraction is carried out above 40°C.

10. The process of claim 1, wherein the polyamine comprises at least one selected from hexamethylene diamine and dimers and trimers of hexamethylene diamine.

11. The process of claim 1, wherein the polyamine comprises at least one selected from polyethylenimine, and polyethylenimine in aqueous solution.

12. The process of claim 1, wherein the polyamine comprises dimers of hexamethylene diamine.

13. The process of claim 1, wherein the extraction solvent is cyclohexane.

14. The process of claim 1, wherein the feed mixture is an effluent stream from a hydrocyanation process.

15. The process of claim 14, wherein the hydrocyanation process includes a 3-pentenenitrile hydrocyanation process; and optionally
wherein the hydrocyanation process includes a 1,3-butadiene hydrocyanation process.

## Patentansprüche

1. Prozess zum Rückgewinnen von Diphosphonit enthaltenden Zusammensetzungen aus einer Einspeisungsmischung, die Diphosphonit enthaltende Zusammensetzungen, organische Mononitrile, organische Dinitrile und eine Lewis-Säure umfasst, in einem mehrstufigen Gegenstrom-Flüssig-Flüssig-Extraktor mit Extraktionslösungsmittel, das aliphatischen Kohlenwasserstoff, cycloaliphatischen Kohlenwasserstoff oder eine Mischung aus aliphatischem und cycloaliphatischem Kohlenwasserstoff umfasst, wobei der Prozess Folgendes umfasst:
a) Strömen der Einspeisungsmischung in einen Mischbereich eines Mischer-Abscheiders in der ersten Stufe des mehrstufigen Gegenstrom-Flüssig-Flüssig-Extraktors;
b) Berühren der Einspeisungsmischung mit Extraktionslösungsmittel aus der zweiten Stufe des mehrstufigen Gegenstrom-Flüssig-Flüssig-Extraktors in dem Mischbereich des Mischer-Abscheiders der ersten Stufe, um eine Mischphase zu bilden, die eine leichte Phase und eine schwere Phase umfasst, wobei die leichte Phase Extraktionslösungsmittel und extrahierte Diphosphonit enthaltende Zusammensetzungen umfasst, und wobei die schwere Phase organische Mononitrile und organische Dinitrile umfasst;
c) Übergeben der Mischung aus Schritt (b) an einen Abscheidebereich in dem Mischer-Abscheider der ersten Stufe, wobei sich die Mischphase in die leichte Phase und die schwere Phase trennt; und
d) **gekennzeichnet durch** Einführen einer Lewis-Base in den Abscheidebereich der ersten Stufe,
wobei ein Komplex aus Lewis-Säure und Lewis-Base in dem Abscheidebereich in dem Mischer-Abscheider der ersten Stufe gebildet wird, wobei mindestens ein Teil der leichten Phase aus dem Abscheidebereich entnommen und behandelt wird, um Diphosphonit enthaltende Zusammensetzungen rückzugewinnen, die in die leichte Phase extrahiert wurden, und wobei mindestens ein Teil der schweren Phase an die zweite Stufe des mehrstufigen Gegenstrom-Flüssig-Flüssig-Extraktors übergeben wird;
wobei die Lewis-Base ausgewählt ist aus der Gruppe, bestehend aus:
a) Polyamin; und
b) Poly(Acrylsäure), Natriumsalz.

2. Prozess nach Anspruch 1, wobei die Lewis-Säure ZnCl₂ ist.

3. Prozess nach Anspruch 1, wobei die Extraktionslösungsmitteleinspeisung von der zweiten Stufe mindestens 1000 ppm Diphosphonit enthaltende Zusammensetzungen umfasst.

4. Prozess nach Anspruch 1, wobei die Diphosphonit enthaltende Zusammensetzung Folgende ist:
(R¹)(R²-O)P-O-Y-O-P(O-R³)(R⁴) I
wobei R¹ und R² jeweils unabhängig identische oder unterschiedliche, getrennte oder überbrückte organische Radikale sind; R³ und R⁴ jeweils unabhängig identische oder unterschiedliche, getrennte oder überbrückte organische Radikale sind; und Y eine brückenbildende Gruppe ist.

5. Prozess nach Anspruch 1, wobei die Diphosphonit enthaltende Zusammensetzung ausgewählt ist aus der Gruppe, bestehend aus: 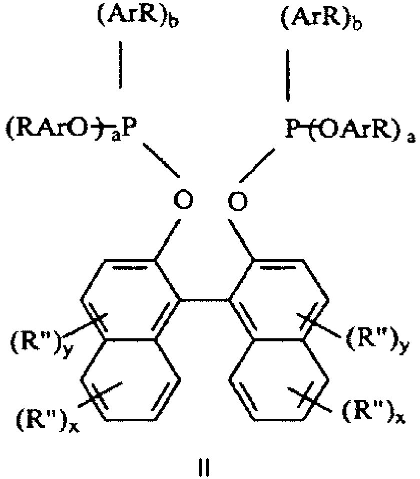 und 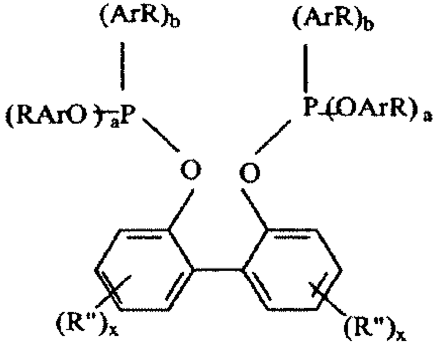 wobei:
x=0 bis 4;
y=0 bis 2;
a gleich 1 und b gleich 1 ist;
jedes Ar individuell Phenyl oder Naphthyl ist, und die zwei Ar-Gruppen, die direkt oder indirekt (über ein Sauerstoff-Atom) an das gleiche Phosphor-Atom gebunden sind, durch eine Verbindungseinheit untereinander verbunden werden können, die ausgewählt ist aus der Gruppe, bestehend aus direkter Bindung, Alkyliden, Sekundär- oder Tertiär-Amin, Sauerstoff, Sulfid, Sulfon und Sulfoxid;
jedes R individuell Wasserstoff, Ethenyl, Propenyl, Acryloyl, Methacryloyl, ein organisches Radikal mit einer endständigen Ethenyl-, Propenyl-, Acryloyl- oder Methacryloyl-5-Gruppe, linearem oder verzweigtem Alkyl, Cycloalkyl, Acetal, Ketal, Aryl, Alkoxy, Cycloalkoxy, Aryloxy, Formyl, Ester, Fluor, Chlor, Brom, Perhaloalkyl, Hydrocarbylsulfinyl, Hydrocarbylsulfonyl, Hydrocarbylcarbonyl oder zyklischem Ether ist;
jedes Ar weiter durch lineares oder verzweigtes Alkyl, Cycloalkyl, Acetal, Ketal, Aryl, Alkoxy, Cycloalkoxy, Aryloxy, Formyl, Ester, Fluor, 10-Chlor, Brom, Perhaloalkyl, Hydrocarbylsulfinyl, Hydrocarbylsulfonyl, Hydrocarbylcarbonyl oder zyklisches Ether substituiert werden kann;
jedes R" individuell Wasserstoff, Ethenyl, Propenyl, ein organisches Radikal mit einer endständigen Ethenyl- oder Propenyl-Gruppe, lineares oder verzweigtes Alkyl, Cycloalkyl, Acetal, Ketal, Aryl, Alkoxy, Cycloalkoxy, Aryloxy, Formyl, Ester, Fluor, Chlor, 15-Brom, Perhaloalkyl, Hydrocarbylsulfinyl, Hydrocarbylsulfonyl, Hydrocarbylcarbonyl oder zyklisches Ether ist.

6. Prozess nach Anspruch 5, wobei mindestens ein R Ethenyl, Propenyl, Acryloyl, Methacryloyl oder das organische Radikal mit einer endständigen Ethenyl-, Propenyl-, Acryloyl- oder Methacryloyl-Gruppe darstellt oder mindestens ein R" Ethenyl, Propenyl oder das organische Radikal mit einer endständigen Ethenyl- oder Propenyl-Gruppe darstellt.

7. Prozess nach Anspruch 1, wobei die Diphosphonit enthaltende Zusammensetzung Folgende ist:

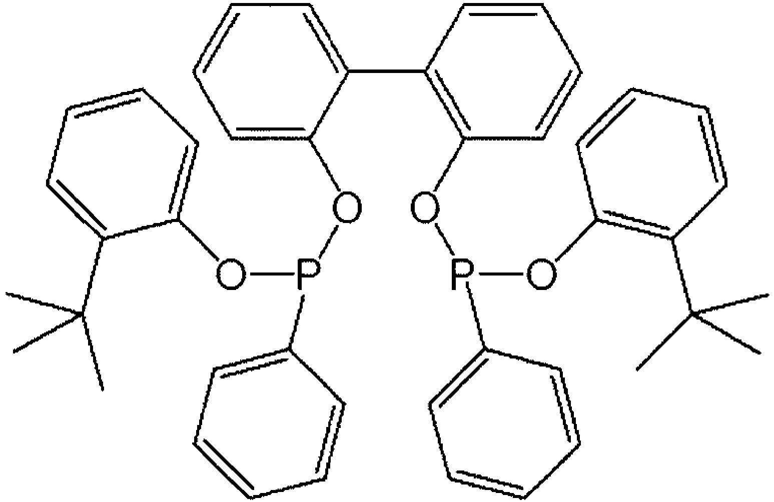

8. Prozess nach Anspruch 2, wobei mindestens ein Teil der Diphosphonat enthaltenden Zusammensetzung mit nullwertigem Ni komplexiert ist.

9. Prozess nach Anspruch 1, wobei mindestens eine Stufe der Extraktion bei über 40 °C ausgeführt wird.

10. Prozess nach Anspruch 1, wobei das Polyamin mindestens eines umfasst, ausgewählt aus Hexamethylen-Diamin und Hexamethylen-Dimeren und -Trimeren.

11. Prozess nach Anspruch 1, wobei das Polyamin mindestens eines umfasst, ausgewählt aus Polyethylenimin und Polyethylenimin in wässriger Lösung.

12. Prozess nach Anspruch 1, wobei das Polyamine Hexamethylendiamin-Dimere umfasst.

13. Prozess nach Anspruch 1, wobei das Extraktionslösungsmittel Cyclohexan ist.

14. Prozess nach Anspruch 1, wobei die Einspeisungsmischung ein Austrittsstrom aus einem Hydrocyanierungsprozess ist.

15. Prozess nach Anspruch 14, wobei der Hydrocyanierungsprozess einen 3-Pentennitril-Hydrocyanierungsprozess einschließt; und optional
wobei der Hydrocyanierungsprozess Prozess einen 1,3-Butadien-Hydrocyanierungsprozess einschließt.

## Revendications

1. Processus de récupération de composés contenant du diphosphonite à partir d'un mélange d'alimentation comprenant des composés contenant du diphosphonite, des mononitriles organiques, des dinitriles organiques et un acide de Lewis dans un extracteur liquide-liquide à contre-courant multi-étagé avec un solvant d'extraction comprenant un hydrocarbure aliphatique, un hydrocarbure cycloaliphatique ou un mélange d'un hydrocarbure aliphatique et d'un hydrocarbure cycloaliphatique, ledit processus comprenant :
a) un écoulement du mélange d'alimentation jusqu'à une section de mélange d'un mélangeur-décanteur dans le premier étage de l'extracteur liquide-liquide à contre-courant multi-étagé ;
b) une mise en contact du mélange d'alimentation avec un solvant d'extraction à partir du second étage de l'extracteur liquide-liquide à contre-courant multi-étagé dans la section de mélange du mélangeur-décanteur du premier étage pour former une phase mixte comprenant une phase légère et une phase lourde, dans lequel la phase légère comprend un solvant d'extraction et des composés contenant du diphosphonite extraits, et dans lequel la phase lourde comprend un mononitrile organique et des dinitriles organiques ;
c) un passage du mélange issu de l'étape (b) à une section de décantation dans le mélangeur-décanteur du premier étage, dans lequel la phase mixte se sépare en la phase légère et la phase lourde ; et
d) **caractérisé par** une introduction d'une base de Lewis dans la section de décantation du premier étage,
dans lequel un complexe d'un acide de Lewis et d'une base de Lewis est formé dans la section de décantation dans le mélangeur-décanteur du premier étage, dans lequel au moins une portion de la phase légère est retirée de la section de décantation et traitée pour récupérer des composés contenant du diphosphonite extraits dans la phase légère, et dans lequel au moins une portion de la phase lourde est passée au second étage de l'extracteur liquide-liquide à contre-courant multi-étagé ;
dans lequel la base de Lewis est sélectionnée dans le groupe consistant en :
a) une polyamine ; et
b) un sel de sodium de poly(acide acrylique).

2. Processus selon la revendication 1, dans lequel l'acide de Lewis est du ZnCl₂.

3. Processus selon la revendication 1, dans lequel le solvant d'extraction alimenté à partir du second étage comprend au moins 1 000 ppm de composés contenant du diphosphonite.

4. Processus selon la revendication 1, dans lequel le composé contenant du diphosphonite est :
(R¹)(R²-O)P-O-Y-O-P(O-R³)(R⁴) I
où R¹ et R² sont chacun indépendamment des radicaux organiques identiques ou différents, séparés ou pontés ; R³ et R⁴ sont chacun indépendamment des radicaux organiques identiques ou différents, séparés ou pontés ; et Y est un groupe de pontage.

5. Processus selon la revendication 1, dans lequel le composé contenant du diphosphonite est sélectionné dans le groupe consistant en : 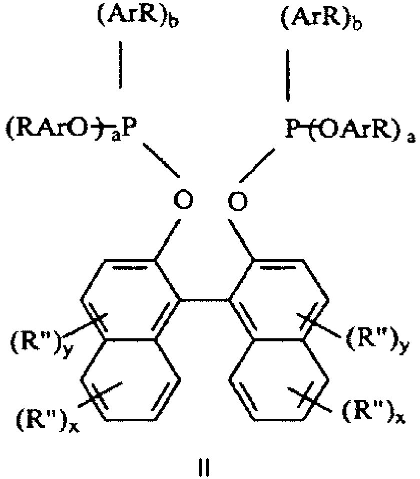 et 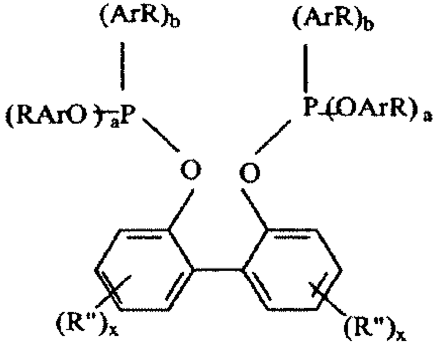 dans lesquelles :
x = 0 à 4 ;
y = 0 à 2 ;
a est 1 et b est 1 ;
chaque Ar est individuellement un phényle ou un naphtyle, et les deux groupes Ar qui sont liés directement ou indirectement (par l'intermédiaire d'un oxygène) au même atome de phosphore peuvent être reliés l'un à l'autre par une unité de liaison sélectionnée dans le groupe consistant en une liaison directe, un alkylidène, un amine secondaire ou tertiaire, un oxygène, un sulfure, une sulfone, et un sulfoxyde ;
chaque R est individuellement un hydrogène, un éthényle, un propényle, un acryloyle, un méthacryloyle, un radical organique avec un groupe terminal éthényle, propényle, acryloyle ou méthacryloyle, un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique ;
chaque Ar peut être en outre substitué par un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique ;
chaque R" est individuellement un hydrogène, un éthényle, un propényle, un radical organique avec un groupe terminal éthényle ou propényle, un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique.

6. Processus selon la revendication 5, dans lequel au moins un R représente un éthényle, un propényle, un acryloyle, un méthacryloyle ou le radical organique avec un groupe terminal éthényle, propényle, acryloyle, ou méthacryloyle ou au moins un R" représente un éthényle, un propényle, ou le radical organique avec un groupe terminal éthényle ou propényle.

7. Processus selon la revendication 1, dans lequel le composé contenant du diphosphonite est :

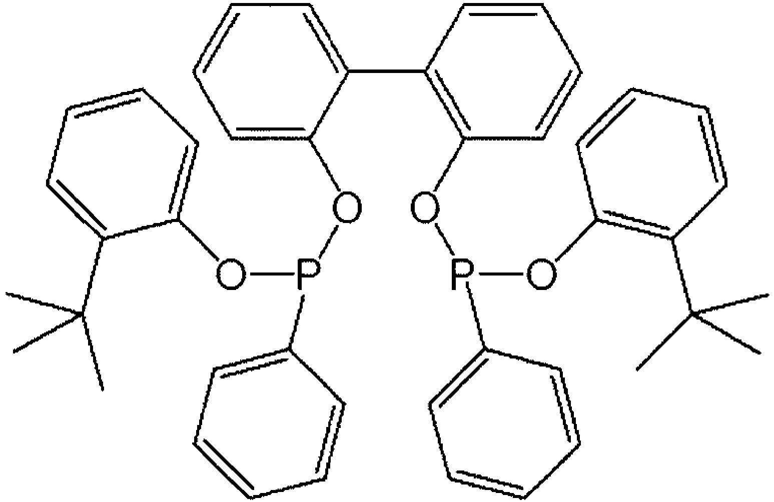

8. Processus selon la revendication 2, dans lequel au moins une portion du composé contenant du diphosphonite est complexée avec du Ni à valence zéro.

9. Processus selon la revendication 1, dans lequel au moins un étage de l'extraction est réalisé à plus de 40 °C.

10. Processus selon la revendication 1, dans lequel la polyamine comprend au moins un sélectionné parmi de l'hexaméthylènediamine et des dimères et des trimères d'hexaméthylènediamine.

11. Processus selon la revendication 1, dans lequel la polyamine comprend au moins une sélectionnée parmi de la polyéthylènimine, et de la polyéthylènimine dans une solution aqueuse.

12. Processus selon la revendication 1, dans lequel la polyamine comprend des dimères d'hexaméthylènediamine.

13. Processus selon la revendication 1, dans lequel le solvant d'extraction est du cyclohexane.

14. Processus selon la revendication 1, dans lequel le mélange d'alimentation est un flux d'effluent issu d'un processus d'hydrocyanation.

15. Processus selon la revendication 14, dans lequel le processus d'hydrocyanation inclut un processus d'hydrocyanation de 3-pentènenitrile ; et optionnellement
dans lequel le processus d'hydrocyanation inclut un processus d'hydrocyanation de 1,3-butadiène.
